# EUROPÄISCHE PATENTSCHRIFT

(11) **EP 1 521 401 B1**
(45) Veröffentlichungstag und Bekanntmachung des Hinweises auf die Patenterteilung: **10.04.2013**
(21) Anmeldenummer: 04022509.6
(22) Anmeldetag: 22.09.2004
(51) Int. Cl.: H04L 29/08, H04L 12/46, H04L 12/28, H04L 12/44, H05B 37/02, H04L 29/12, H04L 12/24, H04L 29/06

(54) **System der Gebäudesystemtechnik und Verfahren zum Konfigurieren desselben**
System in Buildingsystem Industry and Method for Configuration thereof
Système de l'industrie des systèmes batiments et procédée pour la configuration dudit système

(30) Priorität: 01.10.2003 DE 10345737
(43) Veröffentlichungstag der Anmeldung: 06.04.2005
(73) Patentinhaber: Merten GmbH, 51674 Wiehl (DE)
(72) Erfinder: Bergmann, Jörgen, Dipl.-Ing., 51674 Wiehl (DE); Hermann, Bernd-Peter, Dipl.-Ing., 51645 Gummersbach (DE); Kuhnert, Jürgen, Dipl.-Ing., 51702 Bergneustadt (DE); Ludolf, Wilhelm S., Dr.-Ing., 72622 Nürtingen (DE); Volz, Ulrich, Dipl.-Ing., 51588 Nümbrecht (DE)

(56) Entgegenhaltungen:
- EP-A- 0 346 614
- EP-A- 1 039 725
- EP-A- 1 294 132
- DE-A- 10 125 607
- US-B1- 6 522 664

## Beschreibung

Die Erfindung betrifft ein System der Gebäudesystemtechnik, bestehend aus einem im Internet-Protokoll (IP) betriebenen lokalen Netzwerk (LAN) und mindestens einem Sub-Netzwerk, das einen Datenbus für den Anschluss von Geräten und einen Konfigurator aufweist.

Die Erfindung betrifft ferner ein Verfahren zum Konfigurieren eines Gebäudesystemtechnik-Systems, das unterschiedliche Netzstrukturen in hierarchischer Zuordnung enthält.

Die Gebäudesystemtechnik sieht ein Bussystem vor, bei dem in einem Gebäude ein Datenbus installiert wird, an welchen Geräte angeschlossen werden. Die Geräte können über Datentelegramme, die über den Datenbus übertragen werden, miteinander kommunizieren. Auf diese Weise können Informationen oder Befehle zwischen zwei Geräten ausgetauscht werden. Ein solcher Befehl kann zum Inhalt haben, dass die Beleuchtung in einem bestimmten Bereich eines Gebäudes eingeschaltet werden soll oder dass eine Markise eingefahren werden soll, weil ein Windmesser eine erhöhte Windgeschwindigkeit festgestellt hat, oder dass eine Jalousie zu einem bestimmten Zeitpunkt betätigt werden soll. Ein genormtes Bussystem für die Gebäudesystemtechnik ist der EIB-Bus (European Installation Bus). Dieses Bussystem verbindet die angeschlossenen Geräte, die untereinander Bustelegramme austauschen. Eine Zentrale ist dabei nicht vorgesehen.

In EIB-Objekten ist zur Konfiguration, Inbetriebnahme und Pflege ein spezielles, nicht im Bussystem verbleibendes Tool, die EIB-Tool-Software (ETS) notwendig. Der Nutzer, der eine Änderung oder einen anderen Eingriff vornehmen will, muss einen speziell ausgebildeten und mit den notwendigen Software-Werkzeugen ausgestatteten Fachmann mit dieser Aufgabe betrauen. Dieser muss die erforderlichen Tätigkeiten vor Ort durchführen.

EP 0 346 614 B1 (Merten et al) beschreibt ein Verfahren zur Initialisierung und zum Betrieb eines derartigen Systems der Gebäudesystemtechnik. Nach dem Verlegen des Datenbusses können an den Anschlussstellen beliebige Geräte installiert werden, die für den Bus vorgesehen sind. Dabei ist zwischen unterschiedlichen Gerätetypen zu unterscheiden. Gerätetypen sind beispielsweise Sensoren für Helligkeit, Temperatur, Wind u.dgl., und Aktoren, wie Schalter, Dimmer, Motoren oder andere Stellglieder. Beim Installieren eines Bussystems werden zunächst die einzelnen Geräte an den dafür vorgesehenen Stellen montiert und mit dem Bus verbunden. Das Initialisieren sieht vor, dass diejenigen Gerätegruppierungen definiert werden, deren Geräte miteinander kommunizieren sollen. In jedem Gerät wird die Adresse und der Typ der jeweiligen Partner-Geräte hinterlegt. Auf diese Weise können die Geräte anschließend miteinander kommunizieren. Zum Initialisieren wird ein Konfigurator benutzt. Hierbei handelt es sich um ein Programmiergerät, das vorübergehend an den Bus angeschlossen werden kann. Die Eingabe des Installationsortes eines Gerätes erfolgt dadurch, dass das installierte Gerät durch einen an ihm durchgeführten Schalt- oder Montagevorgang aktiviert wird. Dadurch wird ein Aktivierungssignal erzeugt, das dem Konfigurator mitgeteilt wird. Der Installateur kann dann den Ort, an dem er den Schalt- oder Meldevorgang durchgeführt hat, dem Konfigurator mitteilen, so dass das betreffende Gerät sowohl nach Gerätetyp als auch nach seinem Installationsort identifiziert ist. Am Konfigurator kann dann die paarweise Zuordnung derjenigen Geräte erfolgen, die miteinander kommunizieren sollen. Diese Methode, die einen Schaltvorgang an jedem einzelnen installierten Gerät erfordert, wird auch als "Turnschuh-Methode" bezeichnet, weil sie viel Laufarbeit erfordert. Eine andere Initialisierung sieht vor, dass der Konfigurator Kennungen der einzelnen Anschlussstellen für Geräte nacheinander aufruft und die Anschlussstellen auf den Aufruf reagierende Signalgeber aufweisen, wodurch beim Ansprechen eines Signalgebers der Ort der Anschlussstelle identifizierbar ist.

Ein Verfahren, das als EIBeasy-Verfahren Eingang in die Praxis gefunden hat, arbeitet wie folgt:

Alle Geräte haben ab Werk den gleichen default-Wert für die individuelle Adresse. Im Projekt wird den Geräten mit Hilfe der Seriennummer oder der Anschlussreihenfolge vollautomatisch vom Konfigurator eine eindeutige individuelle Adresse zugeordnet und programmiert.
Danach fragt der Konfigurator aus den Geräten die standardisierte Kanalinformation, wie Anzahl der Gerätekanäle und Typ der Gerätekanäle (z. B. Dimmen, Schalten, Schalten mit Rückmeldung), ab. Aus den Typinformationen der Gerätekanäle wird vom Konfigurator eine interne Liste mit Information über das unterlagerte Netzwerk bereitgestellt.

Die Kommunikation zwischen den Geräten erfolgt wie beim Standard-EIB-System über sogenannte Gruppenadressen. In der Konfigurationsphase werden die Geräte vom Konfigurator mit provisorischen Gruppenadressen geladen. Mit Hilfe der provisorischen Gruppenadressen können Sensorkanäle bzw. Aktorkanäle durch eine Probebetätigung erkannt werden. Auf diese Weise werden die Geräte, die zusammen eine Funktion bilden sollen (z. B. Taster und Dimmer), ausgewählt. Die Auswahl der Geräte wird vom Konfigurator auf der Basis der Typinformationen zu den Gerätekanälen und Verbindungsregeln unterstützt und überwacht.

Nach Zuordnung der Gerätekanäle erfolgt nach dem Easy-Verbindungsmechanismus die Vergabe und Programmierung der eigentlichen Gruppenadressen in den Geräten, wodurch die Kommunikationsbeziehungen festgelegt sind und die Konfiguration eines Funktionsbereiches abgeschlossen ist.

Bei dem EIBeasy-Verfahren wird ein Konfigurator an den Datenbus angeschlossen, um die Initialisierung bzw. Programmierung des Systems vorzunehmen. Es handelt sich um ein reines Installationsverfahren, das der Elektriker ohne Verwendung einer komplexen Software ausführen kann.

Des weiteren Ist aus der US-B1 6 522 664 ein System der Gebäudesystemtechnik bekannt, bestehend aus einem im IP-Protokoll betriebenen LAN und mindestens einem daran angeschlossenen Sub-Netzwerk, das einen Datenbus für den Anschluss von Geräten umfasst. Jedes Gerät weist einen eigenen Konfigurationsbaustein auf, so dass eine dezentrale Konfiguration des Netzwerks erfolgt.

EP-A-1 294 132 betrifft ein System mit mehreren Subnetzwerken, die jeweils netzwerkspezifisch konfiguriert werden. Möglichkeiten zur netzwerkübergreifenden Kommunikation von Geräten sind nicht beschrieben.

Der Erfindung liegt die Aufgabe zugrunde, ein System der Gebäudesystemtechnik zu schaffen, das LAN-kompatibel ist und eine Vernetzung von Sub-Netzwerken, die jeweils auf einem lokalen Datenbus basieren, ermöglicht, wobei eine systemübergreifende Kommunikation von Geräten möglich ist.

Das erfindungsgemäße System der Gebäudesystemtechnik ist durch den Patentanspruch 1 definiert. Hiernach ist jedes der Datenbus-basierten Sub-Netzwerke mit einem bleibend installierten Konfigurator ausgestattet, der Informationen über die dem Sub-Netzwerk angehörenden Geräte enthält und seinerseits mindestens eine Schnittstelle für die Kommunikation mit einem übergeordneten IP-Controller und dem übergeordneten LAN bildet.

Durch dieses Konzept sind gegenüber der seitherigen EIB-Ausprägung weitere Dienste in standardisierter Form und damit kostengünstig realisierbar. Eine nicht notwendige vollständige Auflistung ist nach nachfolgend gegeben.

| | |
|---|---|
| Web-Server für ein unterlagertes EIB-System | Konfiguration |
| | Parametrierung |
| | Visualisierung |
| | |
| e-mail-Dienste | Zustandsmeldungen |
| | SMS-Ausgabe |
| | Alarmierung |
| | |
| telnet/ftp | Administration des Systems |
| | Trouble-Shooting |
| | Fernwirken |

In einer Erweiterung können mehrere derartige Systeme parallel nebeneinander betrieben werden. Sinnvollerweise werden diese dann über die IP-Schnittstellen miteinander vernetzt. Bei mehr als einer IP-Schnittstelle am Konfigurator lässt sich zum Beispiel in einer Wohnanlage ein "internes Hausnetz" besonders einfach realisieren, das nur internen Diensten zur Verfügung steht. Dadurch können Zentralfunktionen von oben nach unten durchgereicht werden.

Funktionen, die in der Ausführung mehrere Bereiche betreffen und in einem Bereich ausgelöst werden, kann das IP-System an die betreffenden Bereiche weiterleiten.

Der IP-Controller verwaltet die zugehörigen Sub-Netzwerke, die räumlich entfernt voneinander angeordnet sein können. Auf diese Weise besteht die Möglichkeit, mehrere Sub-Netzwerke untereinander zu vernetzen. Erfindungsgemäß übernimmt der IP-Controller die gegenseitige Zuordnung der Geräte als Sender und Empfänger jedenfalls dann, wenn sie unterschiedlichen Sub-Netzwerken angehören. Nach der Konfiguration erfolgt die Kommunikation zwischen diesen Geräten über den Konfigurator und das LAN hinweg. Obwohl die Datenübertragung in dem übergeordneten Netzwerk und den Sub-Netzwerken nach unterschiedlichen Protokollen erfolgt, ist eine Kommunikation in beiden Richtungen über die Konfiguratoren möglich, die eine bidirektional umsetzende Schnittstelle bilden. Die Konfiguratoren haben somit zwei Aufgaben, nämlich einerseits die Speicherung und Verwaltung des Aufbaus des Sub-Netzwerks und andererseits die Umsetzung zwischen Bus-Protokoll und Internet-Protokoll.

Die Erfindung ermöglicht einerseits die Vernetzung mehrerer EIB-Systeme und andererseits eine komplette Datenhaltung des übergeordneten Gesamtsystems, das die Konfiguration und Parameter der Gerätekommunikation speichert.

Dadurch entsteht ein leistungsfähiges System, das Funktionalitäten, wie Beleuchtung, Heizung, Klimalüftung usw., sowohl in einem Gebäude als auch in einem übergeordneten Komplex übernehmen kann. Die Funktion der Datenhaltung wird von dem IP-Controller wahrgenommen, der dem übergeordneten LAN angehört. Alle Daten werden in einem entsprechenden Baustein abgelegt. Dadurch werden Wartung und Service vereinfacht, weil auf die Daten bzw. deren Abbild zentral zugegriffen werden kann. Es besteht die Möglichkeit, von jeder Stelle des LAN Änderungen vorzunehmen. Es ist daher nicht erforderlich, dass Änderungen von einem am Ort der Änderung anwesenden Installateur durchgeführt werden. Durch einen Web-Server können Visualisierungen durch Standard-Browser erfolgen. Eingriffe und Parametrierungen lassen sich dadurch von befugten Personen einfach und direkt über entsprechende Bildschirmmasken vornehmen. Wichtige Meldungen, wie Alarmmeldungen, aus den einzelnen Bereichen können in einer Zentrale dargestellt werden.

Durch die Vernetzung mehrerer Sub-Netzwerke kann beispielsweise in einer Wohnanlage ein "internes Hausnetz" realisiert werden, das nur internen Diensten zur Verfügung steht. Dadurch können Zentralfunktionen von oben (IP-Welt) nach unten (EIB-Welt) durchgereicht werden. Funktionen, die in der Ausführung mehrere Bereiche betreffen und in einem Bereich ausgelöst werden, kann das IP-System an die betreffenden Bereiche bzw. Sub-Netzwerke, weiterleiten.

Fernwartung, Ferndiagnose und Fernkonfiguration sind über die Konfiguratoren der Sub-Netzwerke problemlos möglich. Jeder Teilnehmer des LAN kann auf jeden Konfigurator zugreifen, um die Funktionalität des betreffenden Sub-Netzwerks sichtbar zu machen.

Die Erfindung betrifft ferner ein Verfahren zum Konfigurieren eines Systems der Gebäudesystemtechnik, welches aufweist:
- ein im Internet-Protokoll betriebenes LAN, das einen IP-Controller enthält, und
- mindestens zwei Sub-Netzwerke, von denen jedes einen Datenbus für den Anschluss von Geräten, einen Protokollumsetzer und einen Konfigurator aufweist.

Dieses Verfahren ist gekennzeichnet durch die folgenden Schritte:
a) Vergabe von IP-Adressen an die Konfiguratoren und Zuweisung von Adressbereichen für individuelle Geräteadressen und Gruppenadressen durch den IP-Controller,
b) Abfragen und Erkennen der Geräte eines Sub-Netzwerkes nach ihrem Gerätetyp durch den Konfigurator,
c) Erteilen einer individuellen Geräteadresse an die einzelnen Geräte innerhalb des Sub-Netzwerkes,
d) Übermitteln der Gerätetypen und Geräteadressen der jedem Konfigurator zugeordneten Geräte durch den Konfigurator an den IP-Controller,
e) Zuordnen der Geräte, die untereinander kommunizieren sollen - über die Konfiguratoren hinweg - im IP-Controller,
f) Übermitteln der Zuordnung vom IP-Controller an die jeweiligen Geräte und Speichern der Adresse eines jeweiligen Partner-Gerätes in jedem Gerät.

Die Funktion des Konfigurierens über mehrere Sub-Netzwerke hinweg übernimmt der IP-Controller, der Zugriff zu den einzelnen Konfiguratoren hat und somit die Konfiguration innerhalb eines Sub-Netzwerks abrufen kann. Der IP-Controller enthält also sämtliche Konfigurationsdaten und eventuell die Zustandsinformationen des Netzwerks, das sich aus den Sub-Netzwerken zusammensetzt und im Internet-Protokoll verwaltet wird.

Gemäß einer Ausgestaltung der Erfindung ist vorgesehen, dass zur Durchführung des Schrittes "Zuordnen" an einem Bildschirm eine zu konfigurierende Funktion angezeigt wird, zu der die möglichen Eingabegeräte und Ausgabegeräte zum Auswählen durch einen Benutzer angegeben werden, und dass Eigenschaften der Funktion, z.B. ein Zeitpunkt der Ausführung, ausgewählt werden können. Auf diese Weise kann für einen bestimmten Ort eine gewünschte Funktion realisiert werden. Dabei wird auch der Ort, an dem das Eingabesignal erzeugt wird und der Ort, an dem die Funktion ausgeführt werden soll, vom Benutzer definiert.

Im Folgenden wird unter Bezugnahme auf die Zeichnungen ein Ausführungsbeispiel der Erfindung näher erläutert. Dieses Ausführungsbeispiel ist nicht so zu verstehen, dass dadurch der Schutzbereich der Erfindung verringert wird. Dieser wird vielmehr durch die Patentansprüche und deren Äquivalente bestimmt.

Es zeigen:
- Fig. 1: eine schematische Darstellung eines Ausführungsbeispiels eines Systems der Gebäudesystemtechnik nach der vorliegenden Erfindung,
- Fig. 2: ein Ausführungsbeispiel einer Bildschirmmaske für die Konfiguration von Geräten.

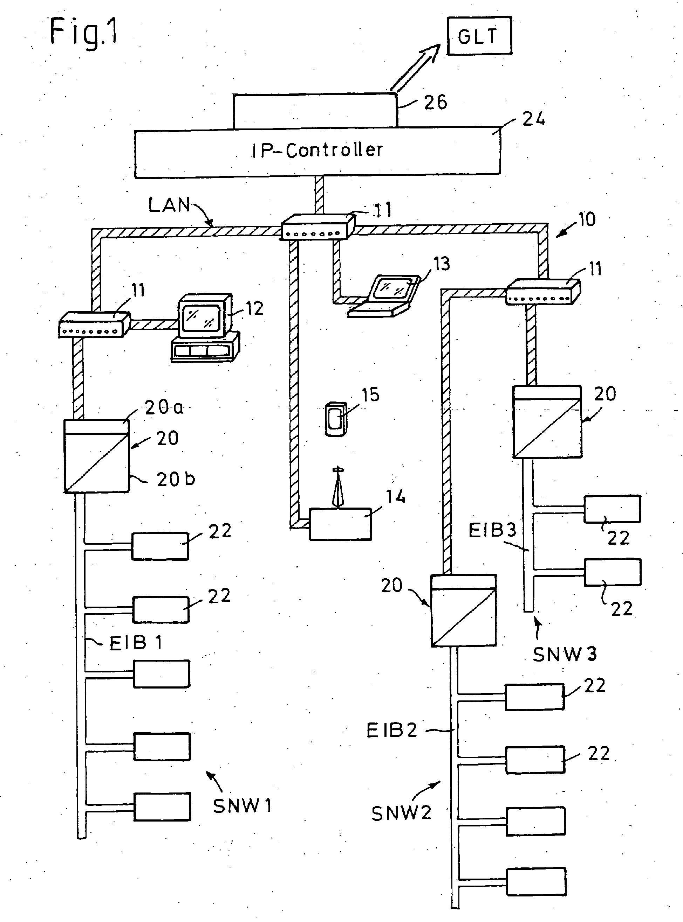

Gemäß Figur 1 ist ein LAN 10 vorgesehen, das im Internet-Protokoll IP betrieben wird. Bei dem LAN 10 handelt es sich beispielsweise um ein Ethernet. Die IP-Kommunikationsverbindungen sind schraffiert dargestellt. Das LAN 10 enthält jeweils an Verzweigungsstellen einen Verteiler 11, der als Hub oder Switch ausgebildet ist und jede von mehreren Verzweigungsleitungen bidirektional mit einer Hauptleitung verbindet. An die Verzweigungsleitungen sind Datengeräte angeschlossen, wie beispielsweise ein PC 12, ein Laptop 13, ein WLAN (Wireless Local Area Network) 14 in Kombination mit einem PDA (Personal Digital Assistant) 15. An jeweils einen Anschluss eines Verteilers 11 ist ein Konfigurator 20 angeschlossen. Dieser enthält einen Anschluss 20a für die Kommunikation mit dem LAN 10 und einen Protokollumsetzer 20b für die bidirektionale Umsetzung zwischen IP- und EIB-Protokoll. Jeder Konfigurator 20 ist Bestandteil eines Sub-Netzwerks SNW1,SNW2, SNW3, das einen nach der EIB-Norm betriebenen EIB-Bus EIB1,EIB2,EIB3 enthält. Der Bus weist mehrere Anschlussstellen auf, an die jeweils ein Gerät 22 angeschlossen ist. Die Geräte 22 können untereinander Bus-Telegramme austauschen. Die Geräte 22 sind von unterschiedlichen Typen, wie beispielsweise Schalter, Sensoren unterschiedlicher Art und Aktuatoren unterschiedlicher Art. Bei der Konfiguration werden bestimmte Kombinationen von Geräten 22 festgelegt, die untereinander über den betreffenden Bus kommunizieren. Das Bus-Protokoll, nach dem der lokale Datenbus betrieben wird und welches für die Geräte 22 verständlich ist, weicht von dem IP-Protokoll, nach dem das LAN 10 betrieben wird, ab.

Bestandteil des LAN 10 ist ein IP-Controller 24, der die Konfiguration und Verwaltung der Sub-Netzwerke durchführt. Verbunden mit diesem IP-Controller 24 ist ein Speicher 26, der die Systemdaten der Gebäudesystemtechnik aufnimmt und für die übergeordnete Gebäudeleittechnik GLT bereitstellt. Die Gebäudesystemtechnik umfasst ein vernetztes Bussystem aus Geräten der Installationstechnik. Die Gebäudesystemtechnik kann Bestandteil einer übergeordneten Gebäudeleittechnik GLT sein, die z. B. auch Aufzugssteuerungen und andere Steuerungen enthält.

Bei der Installation eines Datenbus werden die einzelnen Geräte 22 in Wanddosen installiert. Danach erfolgt die Konfiguration nach dem eingangs beschriebenen EIBeasy-Verfahren. Dabei wird jedem Installationsort ein bestimmter Gerätetyp zugeordnet. Anschließend fragt der zugehörige Konfigurator 20 die Geräte 22 nach ihrem Typ ab. Dann wird für jedes Gerät der Gerätetyp gespeichert. Voraussetzung ist hierbei, dass die beiden Geräte, die jeweils miteinander kommunizieren sollen, demselben Sub-Netzwerk angehören.

Innerhalb eines Sub-Netzwerkes SNW wird die Konfiguration am Konfigurator 20 durchgeführt. Sie erfolgt nach dem EIBeasy-Verfahren, wie es in EP 0 346 614 B1 beschrieben ist.

Die angeschlossenen Geräte und die bereits durchgeführten lokalen Konfigurationen werden von dem Konfigurator 20 dem IP-Controller 24 mitgeteilt.

Sodann verfügt der IP-Controller über Informationen über die Geräte nach ihren Funktionen, ihrem Gerätetyp und Informationen über das mögliche Partnergerät. Es folgt die Auswahl der Geräte, die über Subnetze hinweg miteinander eine Funktion bilden sollen durch den Anwender vor Ort, z. B. durch Probebetätigung. Nach Abschließen der Eingabe durch entsprechende Quittierung erfolgt das Herunterladen von Daten zum Generieren der Funktionen in die Geräte 22. In jedem Gerät 22 wird die Gruppenadresse der Kommunikationspartner gespeichert.

Zur Beschleunigung des Programmierprozesses werden alle Informationen in dem IP-Controller gesammelt und anschließend en bloc an den Konfigurator 20 übertragen, der dann die Verteilung an die Geräte 22 übernimmt.

Der Speicher 26 speichert einen Funktionsplan des Gesamtnetzes, das mehrere Sub-Netzwerke umfasst. In diesem Funktionsplan sind die Geräte 22 mit ihren Kommunikationsbezeichnungen aufgeführt sowie die Installationsorte und Gerätetypen.

Ferner kann der Speicher 26 einen Statusplan enthalten. Der Statusplan gibt den augenblicklichen Zustand der Geräte an, beispielsweise den Einschaltzustand oder den Ausschaltzustand eines Schalters, die von einem Temperatursensor augenblicklich gemessene Temperatur, u.dgl.

Aus dem Speicher 26 kann der Funktionsplan und der Statusplan abgerufen und auf andere Teilnehmer des LAN übertragen werden, so dass jeder Teilnehmer, falls er über einen autorisierten Netzzugang verfügt, diese Daten erhalten kann. Eine Datensicherung kann dadurch erfolgen, dass der Funktionsplan auf ein transportables Medium, z.B. Compact Flash, gespeichert wird.

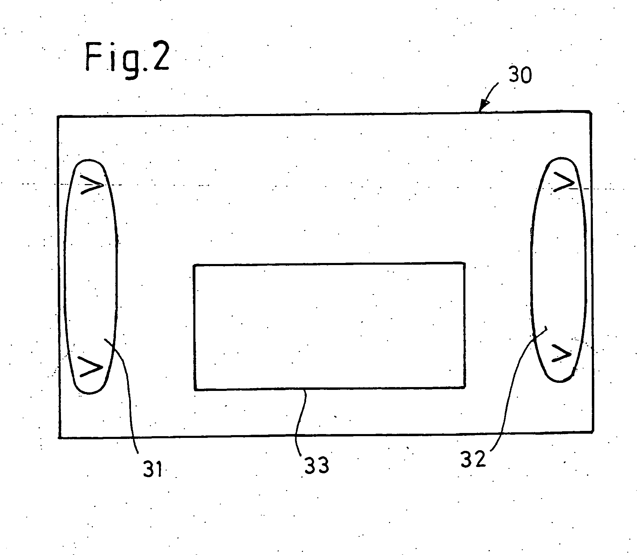

Figur 2 zeigt ein Beispiel für die Durchführung des Schrittes "Zuordnen" anhand einer Bildschirmmaske 30 an einem Bildschirm des IP-Controllers. Bei dem Beispiel handelt es sich um die Einstellung der Funktion "Jalousie". Anhand der Soft-Taste 31 können die für diese Funktion in Betracht kommenden Eingabegeräte aufgerufen werden, wie Taster, Windmesser u.dgl. Der Benutzer kann dann per Mausklick das betreffende Eingabegerät auswählen. Mit einer anderen Soft-Taste 32 kann aus einer Gruppe von in Betracht kommenden Ausgabegeräten das gewünschte Gerät ausgewählt werden.

In einem Feld 33 können die Eigenschaften der Funktion eingegeben werden, z.B. Zeit einstellungen für das Hochfahren oder Herunterfahren der Jalousie.

Wegen der Vernetzung kann die Konfigurierung auch von jedem anderen Datengerät des LAN aus durchgeführt werden.

## Patentansprüche

1. System der Gebäudesystemtechnik bestehend aus
- einem im Internet-Protokoll (IP) betriebenen lokalen Netzwerk, LAN (10), und
- mindestens zwei Sub-Netzwerken (SNW1-SNW3), die an das lokale Netzwerk (10) angeschlossen und miteinander verbunden sind und von denen jedes einen Datenbus (EIB1-EIB3) für den Anschluss von Geräten (22) und einen Konfigurator (20) aufweist,
- wobei jedes Sub-Netzwerk über den Konfigurator (20) konfigurierbar ist,
a) wobei der Aufbau des betreffenden Sub-Netzwerks in dem Konfigurator (20) speicherbar und verwaltbar ist, und
b) wobei mittels des Konfigurators (20) innerhalb des betreffenden Sub-Netzwerkes die an den Datenbus angeschlossenen Geräte mit individuellen Geräteadressen versehbar sind, eine Zuordnung der Geräte (22) als Sender und Empfänger festlegbar ist und diese Zuordnung speicherbar ist,
- und wobei der Konfigurator (20) eine bidirektional umsetzende Schnittstelle (20b) zwischen dem LAN (10) und dem Sub-Netzwerk (SNW1-SNW3) bildet
**dadurch gekennzeichnet,**
- **dass** das im Internet-Protokoll betriebene lokale Netzwerk (10) einen IP-Controller (24) enthält, und
- **dass** mit dem IP-Controller (24) die Konfiguration der Sub-Netzwerke (SNW1-SNW3) und der angeschlossenen Geräte (22) subnetzwerkübergreifend durchführbar ist.

2. System der Gebäudeleittechnik nach Anspruch 1, **dadurch gekennzeichnet, dass** der Konfigurator eine zweite im IP-Protokoll betriebene Schnittstelle zum Anschluss eines weiteren lokalen Netzwerks aufweist.

3. Verfahren zum Konfigurieren eines Systems der Gebäudesystemtechnik, welches aufweist:
- ein im Internet-Protokoll betriebenes LAN (10), das einen IP-Controller (24) enthält, und
- mindestens zwei Sub-Netzwerke (SNW1-SNW3), von denen jedes einen Datenbus (EIB1-EIB3) für den Anschluss von Geräten (22), einen Protokollumsetzer (20b) und einen Konfigurator (20) aufweist,
**gekennzeichnet durch** die folgenden Schritte:
a) Vergabe von IP-Adressen an die Konfiguratoren und Zuweisung von Adressbereichen für individuelle Geräteadressen und Gruppenadressen **durch** den IP-Controller,
b) Abfragen und Erkennen der Geräte eines Sub-Netzwerkes nach ihrem Gerätetyp **durch** den Konfigurator,
c) Erteilen einer individuellen Geräteadresse an die einzelnen Geräte innerhalb des Sub-Netzwerkes **durch** den Konfigurator,
d) Übermitteln der Gerätetypen und Geräteadressen der jedem Konfigurator zugeordneten Geräte **durch** den Konfigurator an den IP-Controller,
e) Zuordnen der Geräte, die untereinander kommunizieren sollen - über die Konfiguratoren hinweg - im IP-Controller,
f) Übermitteln der Zuordnung vom IP-Controller an die jeweiligen Geräte und Speichern der Adresse eines jeweiligen Partner-Gerätes in jedem Gerät.

4. Verfahren nach Anspruch 3, **gekennzeichnet, durch** das Sammeln der Zuordnungen mehrerer Geräte (22) im IP-Controller (24) und Ausgeben der Zuordnungen in einem Block an die Konfiguratoren (20).

5. Verfahren nach Anspruch 3 oder 4, **dadurch gekennzeichnet, dass** der Schritt des Zuordnens die Bestimmung des Installationsortes eines Gerätes umfasst, wobei an dem Gerät, das sich an seinem Installationsort befindet, ein Signal erzeugt wird, welches über den Konfigurator (20) dem IP-Controller (24) mitgeteilt wird.

6. Verfahren nach einem der Ansprüche 3 - 5, **dadurch gekennzeichnet, dass** im IP-Controller (24) ein Funktionsplan mehrerer Sub-Netzwerke einschließlich der über die Konfiguratoren (20) hinweg miteinander kommunizierenden Geräte erzeugt wird.

7. Verfahren nach einem der Ansprüche 3 - 6, **dadurch gekennzeichnet, dass** Im IP-Controller (24) ein Statusplan mehrerer Sub-Netzwerke einschließlich der Zustände der über die Konfiguratoren (20) hinweg miteinander kommunizierenden Geräte (22) erzeugt wird.

8. Verfahren nach einem der Ansprüche 3 - 7, **dadurch gekennzeichnet, dass** für den Konfigurator mindestens eines Sub-Netzwerks ein WebServer eingerichtet wird, der einen Funktionsplan und/oder einen Statusplan des Sub-Netzwerkes enthält und über das Internet zugänglich ist, um den Funktionsplan und/oder Statusplan an anderer Stelle zu visualisieren.

9. Verfahren nach einem der Ansprüche 3 - 8, **dadurch gekennzeichnet, dass** die Gerätepaarungen, deren Geräte demselben Sub-Netzwerk angehören, an dem Konfigurator dieses Sub-Netzwerkes einander zugeordnet werden können, wobei der Konfigurator diese Zuordnung dem IP-Controller mitteilt.

10. Verfahren nach einem der Ansprüche 3 - 9, **dadurch gekennzeichnet, dass** zur Durchführung des Schrittes "Zuordnen" an einem Bildschirm (30) eine herzustellende Funktion (33) angezeigt wird, zu der die möglichen Eingabegeräte und Ausgabegeräte zum Auswählen durch einen Benutzer angegeben werden, und dass Eigenschaften der Funktion ausgewählt werden können.

## Claims

1. Buildings system engineering system comprising
- a local area network, LAN (10), operated using the Internet Protocol (IP), and
- at least two subnetworks (SNW1 - SNW3) which are connected to the local area network (10) and to one another and each of which has a data bus (EIB1 - EIB3), for the connection of devices (22), and a configurator (20),
- wherein each subnetwork can be configured using the configurator (20),
a) wherein the design of the relevant subnetwork can be stored and managed in the configurator (20), and
b) wherein the configurator (20) can be used to provide the devices connected to the data bus with individual device addresses within the relevant subnetwork, to define an association for the devices (22) as transmitters and receivers and to store this association,
- and wherein the configurator (20) forms a bidirectionally converting interface (20b) between the LAN (10) and the subnetwork (SNW1 - SNW3), **characterized**
- **in that** the local area network (10) operated using the Internet Protocol contains an IP controller (24), and
- **in that** the IP controller (24) can be used to configure the subnetworks (SNW1 - SNW3) and the connected devices (22) across subnetworks.

2. Buildings system engineering system according to Claim 1, **characterized in that** the configurator has a second interface operated using the IP protocol for connecting a further local area network.

3. Method for configuring a buildings system engineering system which has
- a LAN (10) operated using the Internet Protocol which contains an IP controller (24), and
- at least two subnetworks (SNW1 - SNW3), each of which has a data bus (EIB1 - EIB3), for the connection of devices (22), a protocol converter (20b) and a configurator (20),
**characterized by** the following steps:
a) IP addresses are allocated to the configurators and address ranges for individual device addresses and group addresses are assigned by the IP controller,
b) the devices in a subnetwork are checked and recognized according to their device type by the configurator,
c) an individual device address is issued to the individual devices within the subnetwork by the configurator,
d) the device types and device addresses of the devices associated with each configurator are transmitted to the IP controller by the configurator,
e) the devices which are intended to communicate with one another are associated - across the configurators - in the IP controller,
f) the association is transmitted from the IP controller to the respective devices, and the address of a respective partner device is stored in each device.

4. Method according to Claim 3, **characterized by** the collection of the associations of a plurality of devices (22) in the IP controller (24) and output of the associations in a block to the configurators (20).

5. Method according to Claim 3 or 4, **characterized in that** the step of association comprises the determination of the installation location of a device, wherein the device which is located at the installation location thereof is used to produce a signal which is communicated to the IP controller (24) via the configurator (20).

6. Method according to one of Claims 3 - 5, **characterized in that** the IP controller (24) produces a functional plan for a plurality of subnetworks, including the devices communicating with one another across the configurators (20).

7. Method according to one of Claims 3 - 6, **characterized in that** the IP controller (24) produces a status plan for a plurality of subnetworks, including the states of the devices (22) communicating with one another across the configurators (20).

8. Method according to one of Claims 3 - 7, **characterized in that** the configurator of at least one subnetwork has a web server set up for it which contains a functional plan and/or a status plan from the subnetwork and is accessible via the Internet in order to visually display the functional plan and/or status plan at another location.

9. Method according to one of Claims 3 - 8, **characterized in that** the device pairings in which the devices belong to the same subnetwork can be associated with one another on the configurator of this subnetwork, wherein the configurator communicates this association to the IP controller.

10. Method according to one of Claims 3 - 9, **characterized in that** the "Association" step is performed by displaying on a screen (30) a function (33) to be produced for which the possible input devices and output devices are indicated for selection by a user, and **in that** properties of the function can be selected.

## Revendications

1. Système domotique composé des éléments suivants
- un réseau local, LAN (10), qui fonctionne au protocole Internet (IP) et
- au moins deux sous-réseaux (SNW1-SNW3) qui sont connectés au réseau local (10) et qui sont reliés entre eux et dont chacun présente un bus de données (EIB1-EIB3) pour le raccordement d'appareils (22) et un configurateur (20),
- chaque sous-réseau (SNW1-SNW3) pouvant être configuré par le biais du configurateur (20),
a) la structure du sous-réseau (SNW1-SNW3) concerné pouvant être mise en mémoire et gérée dans le configurateur (20), et
b) les appareils raccordés au bus de données (EIB1-EIB3) au sein du sous-réseau (SNW1-SNW3) concerné pouvant être dotés d'adresses d'appareil individuelles au moyen du configurateur (20), une affectation des appareils (22) en tant qu'émetteurs et récepteurs pouvant être définie et cette affectation pouvant être mise en mémoire,
- et le configurateur (20) formant une interface (20b) à permutation bidirectionnelle entre le LAN (10) et le sous-réseau (SNW1-SNW3)
**caractérisé en ce**
- **que** le réseau local (10) qui fonctionne au protocole Internet (IP) contient un contrôleur d'IP (24), et
- **que** la configuration des sous-réseaux (SNW1-SNW3) et des appareils (22) raccordés peut être effectuée sur l'ensemble des sous-réseaux avec le contrôleur d'IP (24).

2. Système domotique selon la revendication 1, **caractérisé en ce que** le configurateur présente une deuxième interface qui fonctionne au protocole IP pour la connexion d'un autre réseau local.

3. Procédé de configuration d'un système domotique, qui présente :
- un LAN (10) qui fonctionne au protocole Internet, lequel contient un contrôleur d'IP (24), et
- au moins deux sous-réseaux (SNW1-SNW3), dont chacun présente un bus de données (EIB1-EIB3) pour le raccordement d'appareils (22), un convertisseur de protocole (20b) et un configurateur (20),
**caractérisé par** les étapes suivantes :
a) attribution d'adresses IP aux configurateurs et allocation de plages d'adresses pour les adresses d'appareil individuelles et les adresses de groupe par le contrôleur d'IP,
b) interrogation et reconnaissance des appareils d'un sous-réseau d'après leur type d'appareil par le configurateur,
c) remise d'une adresse d'appareil individuelle aux appareils individuels au sein du sous-réseau par le configurateur,
d) communication des types d'appareil et des adresses d'appareil des appareils associés à chaque configurateur par le configurateur au contrôleur d'IP,
e) affectation dans le contrôleur d'IP des appareils qui doivent communiquer entre eux en ignorant le configurateur,
f) communication de l'affectation du contrôleur d'IP aux appareils respectifs et mise en mémoire dans chaque appareil de l'adresse d'un appareil partenaire correspondant.

4. Procédé selon la revendication 3, **caractérisé par** la collecte des affectations de plusieurs appareils (22) dans le contrôleur d'IP (24) et la délivrance des affectations dans un bloc aux configurateurs (20).

5. Procédé selon la revendication 3 ou 4, **caractérisé en ce que** l'étape d'affectation comprend la détermination du lieu d'installation d'un appareil, un signal étant généré sur l'appareil qui se trouve sur son lieu d'installation, lequel est communiqué au contrôleur d'IP (24) par le biais du configurateur (20).

6. Procédé selon l'une des revendications 3 à 5, **caractérisé en ce que** dans le contrôleur d'IP (24) est généré un plan de fonction de plusieurs sous-réseaux, y compris les appareils qui communiquent entre eux en ignorant les configurateurs (20).

7. Procédé selon l'une des revendications 3 à 6, **caractérisé en ce que** dans le contrôleur d'IP (24) est généré un plan d'état de plusieurs sous-réseaux, y compris les états des appareils qui communiquent entre eux en ignorant les configurateurs (20).

8. Procédé selon l'une des revendication 3 à 7, **caractérisé en ce qu'**un serveur Web est installé pour le configurateur d'au moins un sous-réseau, lequel contient un plan de fonction et/ou un plan d'état du sous-réseau et est accessible par l'Internet pour visualiser le plan de fonction et/ou le plan d'état en d'autres endroits.

9. Procédé selon l'une des revendications 3 à 8, **caractérisé en ce que** les paires d'appareils, dont les appareils font partie du même sous-réseau, peuvent être affectées les unes aux autres au niveau du configurateur de ce sous-réseau, le configurateur communiquant cette affectation au contrôleur d'IP.

10. Procédé selon l'une des revendications 3 à 9, **caractérisé en ce que** pour exécuter l'étape « affectation », une fonction (33) à créer est affichée sur un écran (30), pour laquelle les appareils d'entrée et les appareils de sortie possibles sont indiqués en vue de leur sélection par un utilisateur, et **en ce que** des propriétés de la fonction peuvent être sélectionnées.
